# FASCICULE DE BREVET EUROPEEN

(11) **EP 0 511 105 B1**
(45) Date de publication et mention de la délivrance du brevet: **04.01.1995**
(21) Numéro de dépôt: 92401161.2
(22) Date de dépôt: 23.04.1992
(51) Int. Cl.: G01P 3/44

(54) **Roulement comprenant un capteur de vitesse**
Walzenlager mit Geschwindigkeitsmessaufnehmer
Rollbearing with speed sensor

(30) Priorité: 24.04.1991 FR 9105057
(43) Date de publication de la demande: 28.10.1992
(73) Titulaire: JAEGER, F-92303 Levallois-Perret (FR)
(72) Inventeur: Hennequin, Yves, F-78210 St Cyr l'Ecole (FR)
(74) Mandataire: Schrimpf, Robert

(56) Documents cités:
- EP-A- 0 376 771
- GB-A- 2 207 470
- US-A- 3 500 091

## Description

La présente invention concerne le domaine des roulements intégrant des capteurs de vitesse. Un roulement comprenant les caractéristiques de la première partie de la revendication 1 est décrit dans EP-A- 376 771.

On a proposé depuis plusieurs années d'intégrer des capteurs tachymétriques dans des roulements. De tels dispositifs sont décrits par exemple dans les documents FR-A-2629155, FR-A-2558223, FR-A-2625777, US-A-4688951, US-A-4778286 et US-A-4783180.

De tels dispositifs combinant roulement et capteur tachymétrique peuvent être utilisés dans tout système comprenant deux pièces en rotation relative, pour contrôler le mouvement relatif de celles-ci.

La présente invention vise tout particulièrement le domaine des véhicules automobiles. La présente invention n'est cependant pas limitée à cette utilisation particulière et peut trouver application dans le contrôle de tout système comprenant deux pièces susceptibles de rotation relative.

Les dispositifs combinant roulement et capteur tachymétrique, jusqu'ici proposés, ne donnent pas totalement satisfaction.

La présente invention a pour but de perfectionner les dispositifs existants.

Un but principal de la présente invention est de proposer des moyens permettant un montage simple du capteur tachymétrique sur le roulement.

Un but auxiliaire de la présente invention est de proposer des moyens autorisant le phénomène dit de reptation. Celui-ci sera explicité par la suite.

Un autre but auxiliaire de la présente invention est de proposer des moyens autorisant un réglage angulaire simple du capteur.

Ces buts sont atteints selon la présente invention grâce à un roulement comprenant les caractéristiques de la revendication 1.

D'autres caractéristiques, buts et avantages de la présente invention apparaîtront à la lecture de la description détaillée qui va suivre et en regard des dessins annexés donnés à titre d'exemples non limitatifs et sur lesquels :
- la figure 1 représente une vue en coupe axiale d'un roulement conforme à un premier mode de réalisation de la présente invention,
- la figure 2 représente une vue en coupe axiale d'un roulement conforme à un second mode de réalisation de la présente invention,
- la figure 3 représente une vue en coupe axiale d'un roulement conforme à un troisième mode de réalisation de la présente invention,
- la figure 4 représente une vue en coupe axiale d'un roulement conforme à un quatrième mode de réalisation de la présente invention,
- la figure 5 représente une vue de détail d'une gorge annulaire ménagée dans une cage de roulement, de la rainure ménagée dans le support de capteur, et du segment associé,

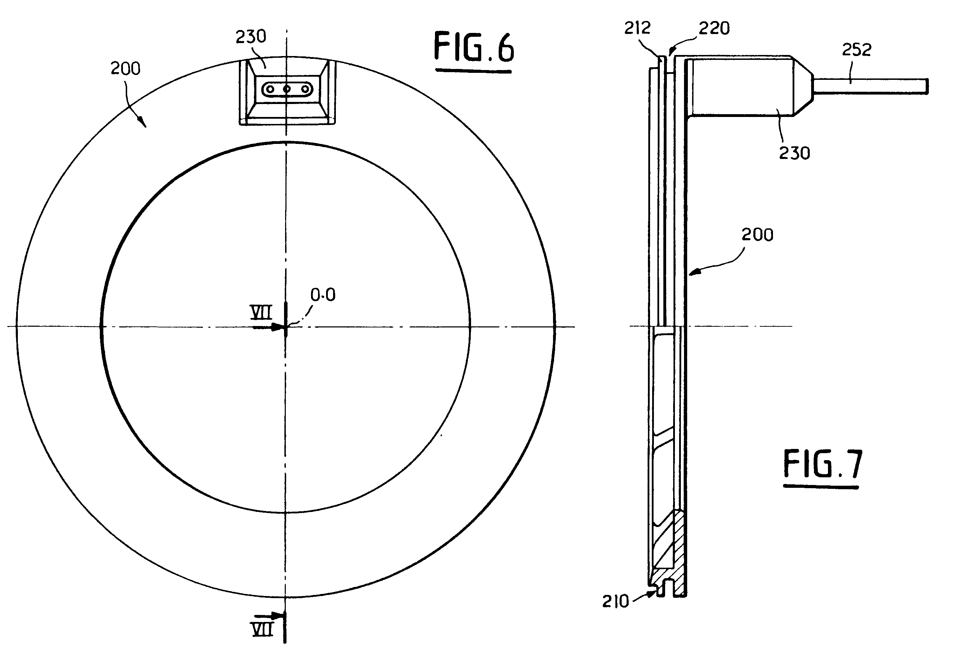

- la figure 6 représente une vue de face, selon l'axe, d'un support de capteur conforme à la présente invention,
- la figure 7 représente une vue latérale et en demi-coupe axiale selon le plan de coupe référencé VII-VII sur la figure 6, du même support de capteur,

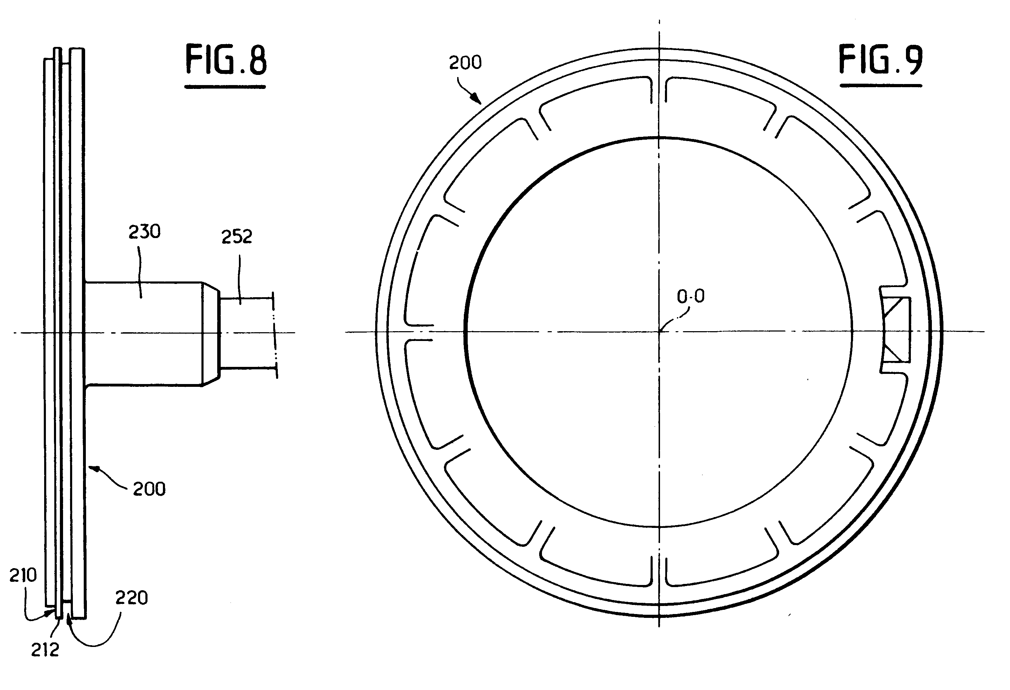

- la figure 8 représente une autre vue latérale du même support, et
- la figure 9 représente une autre vue de face, selon l'axe, du même support.

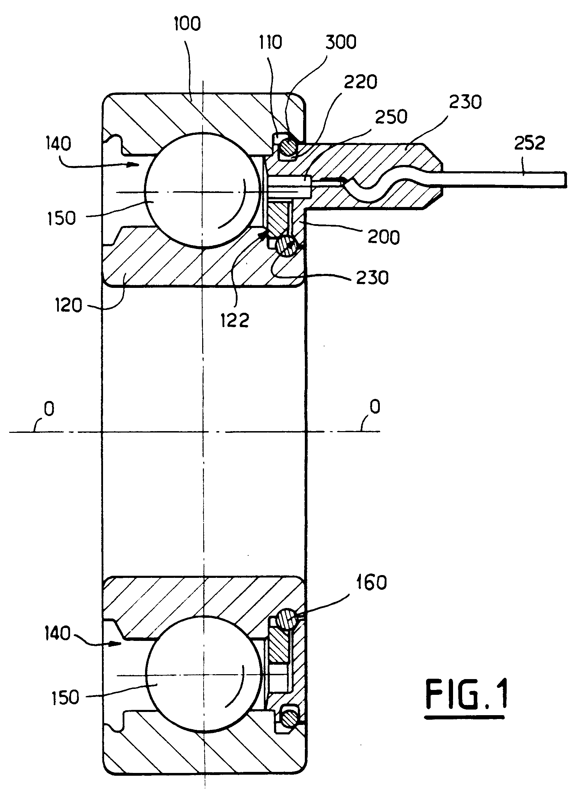

On aperçoit sur les figures 1 annexées des roulements conformes à la présente invention comprenant essentiellement :
- une cage externe 100,
- une cage interne 120,
- des corps de roulement 150 placés entre la cage externe 100 et la cage interne 120,
- un support 200,
- un capteur 250 porté par le support 200, et
- un segment 300 conçu pour lier à translation le support 200 et la cage externe 100.

Selon la représentation donnée sur les figures annexées, les corps de roulement 150 sont des billes. L'invention n'est cependant pas limitée à cette réalisation particulière. Les corps de roulement peuvent être formés de toute structure connue de l'homme de l'art. Il peut s'agir par exemple de corps cylindriques à section constante ou de corps tronconiques disposés sur une ou plusieurs rangées.

Sur les figures, l'axe de rotation du roulement est référencé O-O.

La géométrie des cages 100, 120 représentées sur les figures annexées n'est bien entendu pas limitative et peut faire l'objet de nombreuses variantes.

Il est prévu généralement un fluide de lubrification, le plus souvent de la graisse, dans l'espace 140 défini entre la cage externe 100 et la cage interne 120, qui contient les corps de roulement 150. Cet espace 140 doit donc être fermé et étanchéifié par des structures de joint placées entre la cage externe 100 et la cage interne 120, de part et d'autre des corps de roulement 150.

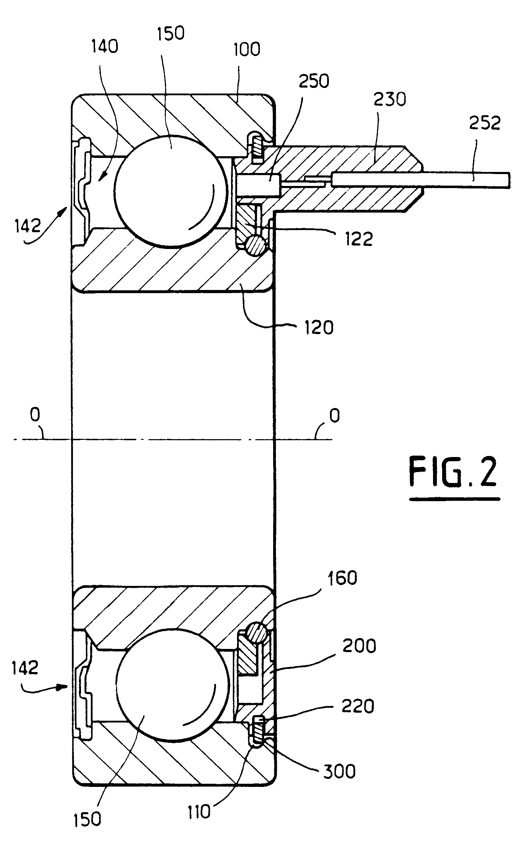

On a représenté schématiquement sous la référence 142, sur la figure 2, une telle structure de joint classique.

Cette structure de joint a été omise sur les autres figures pour simplifier l'illustration.

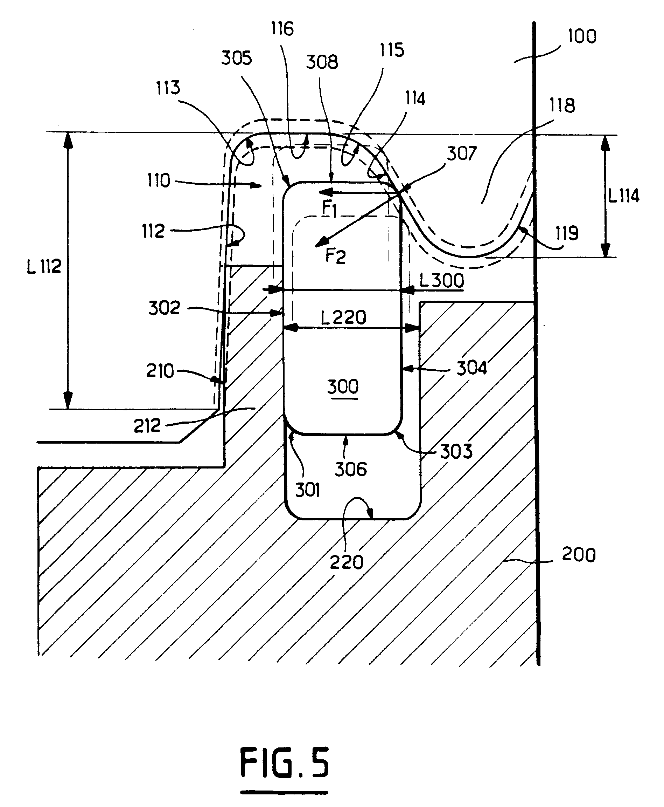

Selon la présente invention, l'une des cages, plus précisément la cage externe 100 selon la représentation donnée sur les figures annexées, comprend une gorge 110 apte à recevoir le segment 300. Selon la représentation donnée sur les figures annexées, en particulier sur la figure 5, lorsque la gorge 110 est formée sur la cage externe 100, la gorge 110 est prévue sur la périphérie interne 102 de la cage externe 100 et dirigée vers l'axe de rotation O-O.

On peut envisager d'utiliser une gorge 110 de section droite constante en forme générale de U délimitée par des bords latéraux parallèles entre eux. Cependant, de préférence, la gorge 110 est une gorge à parois divergentes. Plus précisément, selon la représentation donnée sur les figures annexées, la gorge 110 est délimitée par une paroi latérale 112 axialement interne, par une paroi latérale 114 axialement externe et par une paroi de fond 116.

La première paroi 112, axialement interne, est généralement plane et essentiellement perpendiculaire à l'axe O-O de rotation de roulement. Le cas échéant, cette première paroi latérale 112, axialement interne, délimitant la gorge 110, peut être légèrement inclinée sur l'axe de rotation O-O, en direction du centre du roulement dans le sens d'un rapprochement de l'axe O-O.

La seconde paroi 114, axialement externe, est au contraire fortement inclinée sur l'axe O-O. Elle diverge par rapport à la première paroi 112 précitée en rapprochement de l'axe O-O. En d'autres termes, la seconde paroi 114, axialement externe, est inclinée en direction de l'extérieur du roulement dans le sens d'un rapprochement de l'axe O-O.

La seconde paroi 114, axialement externe, peut être plane ou généralement arrondie sans discontinuité.

La seconde paroi latérale 114, axialement externe, présente typiquement une inclinaison moyenne de l'ordre de 60° par rapport à l'axe O-O.

Le fond 116 de la gorge 110 est généralement plan et parallèle à l'axe O-O. Il se raccorde respectivement à la première paroi latérale axialement interne 112 et à la seconde paroi latérale 114 axialement externe par des zones arrondies concaves référencées respectivement 113 et 115 sur la figure 5.

L'extension radiale L112 de la première paroi latérale 112 précitée est largement supérieure à l'extension radiale L114 de la seconde paroi latérale 114 précitée. En d'autres termes, la seconde paroi 114 délimitant la gorge 110 est formée par une lèvre 118 en saillie sur la périphérie interne de la cage 100, en direction de l'axe O-O et qui présente une extension radiale L114 inférieure à l'extension radiale L112 de la première paroi latérale 112.

De préférence la surface extérieure 119 de cette lèvre 108 est arrondie convexe, pour faciliter la pénétration du segment 300 dans la gorge 110.

Grâce aux caractéristiques qui précèdent, l'homme de l'art comprendra aisément que lorsque le segment 300 repose sur la seconde surface latérale 114 de la gorge 110, la cage correspondante 100 exerce sur le segment 300, et donc sur le support 200 associé un effort illustré schématiquement sous la référence F2 sur la figure 5, dirigé vers l'intérieur du roulement.

La composante axiale F1 de cet effort F2 permet de plaquer une portée d'appui annulaire 210 formée sur le support 200 contre la première paroi latérale 112, pour garantir l'étanchéité du roulement et éviter toute vibration du support 200.

Le support 200 est formé essentiellement d'une structure annulaire centrée sur l'axe O-O de rotation du roulement. Ses dimensions radiales sont adaptées à l'espace 140 formé entre la cage 100 et la cage interne 120, de sorte que le support 200 puisse être placé entre celles-ci. En d'autres termes, la surface périphérique, radialement externe du support 200 étant de préférence étagée, cette surface périphérique radialement externe du support 200 est généralement complémentaire de la surface périphérique radialement interne de la cage externe 100. De même, la surface périphérique radialement interne du support 200 doit être adaptée à la surface périphérique radialement externe de la cage interne 120.

Le support 200 peut être réalisé à l'aide de tout matériau connu approprié. De préférence, selon l'invention, le support 200 est réalisé par moulage de matière thermoplastique, très préférentiellement par surmoulage sur le capteur 250.

Comme indiqué précédemment selon la présente invention, le support 200 est pourvu sur sa surface périphérique, d'une rainure annulaire 220. Plus précisément encore, selon les figures annexées, le support 200 étant conçu pour être fixé à l'aide du segment 300 sur la cage externe 100, la rainure annulaire 220 est formée sur la surface périphérique radialement externe du support annulaire 200.

Une nervure 212 définissant la portée d'appui annulaire 210 précitée, sépare cette portée d'appui 210 et la rainure 220. On comprendra que la largeur axiale de la nervure 212 doit être adaptée de sorte que lorsque la portée d'appui 210 repose contre la première paroi 112 de la gorge 110, le segment 300 soit placé en regard de la seconde paroi 114.

Selon le mode de réalisation représenté sur les figures 1, 3 et 4, le segment 300 présente une section droite circulaire. En d'autres termes, le segment 300 est alors un segment torique.

En revanche, selon le mode de réalisation préférentiel représenté sur les figures 2 et 5, le segment 300 conforme à la présente invention présente une section droite généralement rectangulaire, allongé en direction radiale et à angle arrondi.

Plus précisément encore, selon le mode de réalisation représenté sur la figure 5, le segment 300 est délimité par deux surfaces principales 302, 304 parallèlement entre elles et orientées radialement par rapport à l'axe O-O, c'est-à-dire orthogonales à cet axe, ainsi que par deux surfaces périphériques 306, 308 respectivement radialement interne et radialement externe. Les surfaces périphériques 306 et 308 s'étendent généralement parallèlement à l'axe O-O. Ainsi les surfaces principales 302, 304 et les surfaces secondaires 306, 308 sont généralement planes. La surface périphérique 306 radialement interne et reliée respectivement aux surfaces principales 302 et 304 par des zones arrondies 301, 303, tandis que la surface périphérique radialement externe 308 est raccordée respectivement aux surfaces principales 302, 304 par des zones arrondies 305, 307.

On a représenté sur la figure 5 en traits interrompus, la géométrie de la gorge 110 et des positions correspondantes du segment 300 en cas de forte tolérance de fabrication pour la cage 100. La figure 5 montre ainsi que le système de fixation conforme à la présente invention autorise des tolérances très laches. L'épaisseur L300 du segment 300 est nettement inférieure à la largeur de la gorge 110. Elle est aussi inférieure à la largeur L220 de la rainure 220.

Un joint d'étanchéité 160, de préférence torique, est prévu entre la cage intérieure 120 mobile et le support 200. De préférence, ce support 200 est muni d'une portée 230 complémentaire d'une partie de l'enveloppe externe du joint 160 et qui repose sur celui-ci. Ainsi, l'étanchéité de l'espace 140 est définie d'un côté par la portée d'appui 210 reposant sur la paroi latérale 112 de la gorge 110, de l'autre par le joint 160 sur lequel repose la portée 230 formée sur le support 200.

De préférence, comme représenté sur les figures annexées, le joint d'étanchéité 160 est logé dans une gorge correspondante formée sur la périphérie radialement externe de la cage interne 120.

Le capteur 250 peut être formé de toute structure connue de l'homme de l'art. Le capteur 250 porté par le support 200 peut être formé par exemple d'une sonde à effet Hall placée en regard d'une bague polaire liée à la cage interne 120. On a représenté schématiquement une telle bague sous la référence 122 sur les figures annexées. Cette bague 122 peut faire l'objet de nombreuses variantes. Sa géométrie ne sera donc pas décrite en détail par la suite.

Par ailleurs, la présente invention n'est pas limitée à l'utilisation d'une sonde à effet Hall.

D'une façon plus générale, le dispositif comprend un transducteur 250 porté par le support 200 et conçu pour détecter les passages successifs d'un élément prévu sur la cage mobile 120.

Sur les figures, les fils de sortie de la sonde à effet Hall 250 sont référencés 252.

Le support 200 peut être formé d'une pièce unique en matière thermoplastique.

Il peut s'agir par exemple de polyétherimide, chargé de fibres de verre, tel que le produit commercialisé par la Société GENERAL ELECTRIC sous la dénomination ULTEM.

Comme indiqué précédemment, le support 200 peut plus précisément être surmoulé sur le transducteur 250.

De préférence, le support annulaire 200 comprend au moins une extension axiale 230, par exemple au niveau du transducteur 250. Cette extension axiale 230 peut être utilisée lors de l'orientation angulaire du support 200 et du transducteur 250 associé autour de l'axe O-O. L'extension axiale 230 peut également servir de butée pour immobiliser le support 200 à rotation autour de l'axe O-O.

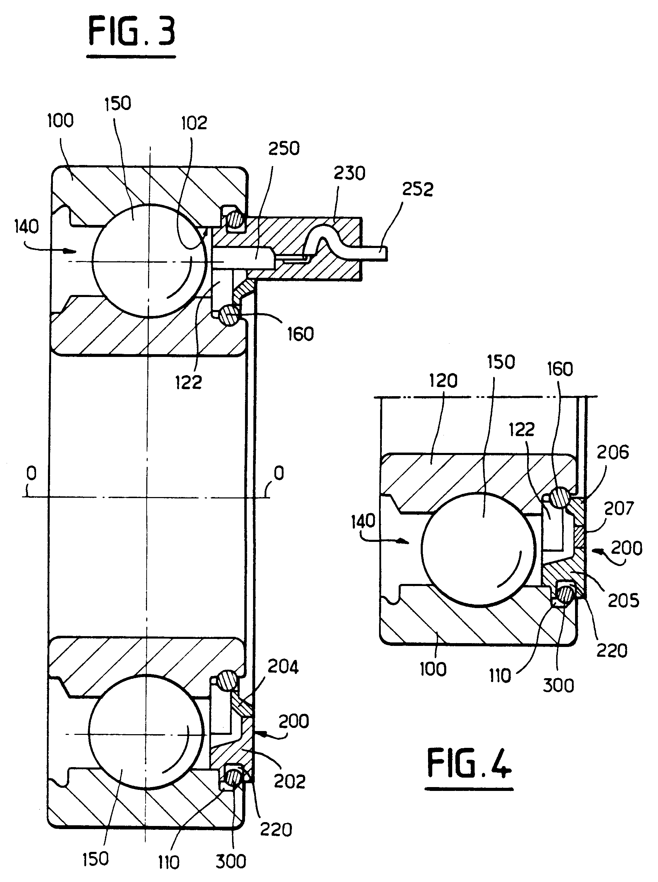

Par ailleurs, comme représenté sur les figures 3 et 4, le support 200 peut être formé de différentes pièces présentant des caractéristiques mécaniques différentes. Cette disposition est intéressante pour améliorer l'étanchéité du système et absorber les éventuels faux-ronds des composants tournants. On a représenté par exemple sur la figure 3, un support 200 formé par combinaison d'un élément rigide radialement externe 202, dans lequel est formé la rainure 220, et d'un élément 204 radialement interne, en matériau plus souple, et en forme de lèvre, qui repose sur le joint annulaire torique 160.

On a également représenté sur la figure 4 un support 200 formé par combinaison de deux éléments rigides 205, 206, respectivement radialement externe et radialement interne, et d'un élément intermédiaire 207 en matériau plus souple, placé entre les deux éléments précités 205 et 206. Dans ce cas la rainure annulaire 220 est formée dans l'élément 205 radialement externe, tandis que l'élément 206 radialement interne repose sur le joint 160.

Comme indiqué précédemment l'élément 204 est réalisé en un matériau plus souple que l'élément 202 et de même l'élément intermédiaire 207 en un matériau plus souple que les éléments 205, 206 qui l'encadrent.

A titre d'exemple non limitatif, les éléments 202, 205 et 206 peuvent être formés en polyamide, tandis que les éléments 204 et 207 peuvent être réalisés à l'aide de caoutchouc nitrile.

Le segment 300 peut également faire l'objet de différents modes de réalisation.

Le segment 300 est de préférence un segment métallique fendu radialement. Ainsi, le segment 300 peut être contracté dans la rainure 220 du support, puis relaché pour s'expanser dans la gorge 110. Le segment 300 est alors de préférence formé en acier à ressort au silicium. Toutefois, le segment 300 n'est pas limité à ce mode de réalisation particulier. Par exemple, le segment 300 pourrait être formé à partir de matériau à mémoire de forme.

La structure conforme à la présente invention autorise un montage simple et irréversible. Elle autorise une orientation angulaire de l'appendice de sortie électrique 230, autour de l'axe O-O après assemblage sur le roulement : en effet le segment 300 laisse le support 200 libre de rotation par rapport à la cage 100 au-dessus du couple de maintien exercé par la force d'expansion du segment 300 sur la cage fixe 100. Le segment 300 élimine toute vibration du support 200. Il garantit grâce à l'effort F une parfaite étanchéité du roulement à la poussière.

La structure conforme à la présente invention autorise également le phénomène dit de "reptation".

L'homme de l'art sait en effet que dans un roulement, il est fréquent que la bague dite fixe ait cependant tendance à se déplacer en rotation par rapport à un chassis fixe en raison du couple agissant sur cette bague fixe par l'intermédiaire des corps de roulement.

En d'autres termes, selon la présente invention, le support 200 et le transducteur 250 peuvent être immobilisés à rotation par rapport au chassis fixe grâce notamment à l'extension axiale 230, alors que la bague 100 fixe peut, si nécessaire, se déplacer légèrement à rotation autour de l'axe O-O par rapport au chassis fixe.

Par ailleurs, la structure conforme à la présente invention, autorise si nécessaire le démontage du support 200 et du transducteur 250.

Selon une autre variante de réalisation, on peut cependant prévoir de bloquer le support 200 et le segment 300 sur la bague de roulement 100 associée, par exemple en injectant un matériau polymère dans la gorge 110 et la rainure 220. Cette injection de polymère peut être réalisée par exemple à l'aide d'un trou formé dans le flasque de couverture du roulement.

Bien entendu la présente invention n'est pas limitée aux modes de réalisations particuliers qui viennent d'être décrits mais s'étend à toutes variantes conformes aux revendications.

Ainsi par exemple, on peut prévoir d'adapter la présente invention sur un roulement dont la cage fixe serait non plus la cage externe 100, mais la cage interne 120.

Dans ce cas, il est bien entendu nécessaire de prévoir la gorge 110 sur la surface périphérique radialement externe de la cage interne fixe 120 et de former la rainure 220 en regard sur la périphérie radialement interne du support 200.

## Revendications

1. Roulement comprenant de façon connue en soi, une cage externe (100), une cage interne (120) et des corps de roulement (150) répartis entre la cage externe (100) et la cage interne (120), l'une des cages (100) comprenant une gorge annulaire (110) et le roulement comprenant en outre un support annulaire (200) portant un capteur (250) caractérisé par le support annulaire (200) muni d'une rainure annulaire périphérique (220) et par un segment (300) apte à interférer avec la gorge annulaire (110) et la rainure annulaire (220) pour immobiliser le support de capteur (200) à translation sur la cage (100) du roulement, tout en autorisant une rotation relative entre ceux-ci.

2. Roulement selon la revendication 1, caractérisé par le fait que le support (200) est conçu pour être logé entre la cage externe (100) et la cage interne (120).

3. Roulement selon l'une des revendications 1 ou 2, caractérisé par le fait que la rainure (220) est prévue sur une surface périphérique du support (200).

4. Roulement selon l'une des revendications 1 à 3, caractérisé par le fait que la gorge ( 110) présente une section divergente.

5. Roulement selon l'une des revendications 1 à 4, caractérisé par le fait que la gorge (110) comprend une paroi latérale (114), axialement externe, fortement inclinée sur l'axe de rotation (O-O).

6. Roulement selon l'une des revendications 1 à 5, caractérisé par le fait que la gorge (110) comprend une paroi latérale (112), axialement interne, sensiblement orthogonale à l'axe de rotation (O-O).

7. Roulement selon l'une des revendications 1 à 6, caractérisé par le fait que le segment (300) présente une section droite sensiblement circulaire.

8. Roulement selon l'une des revendications 1 à 6, caractérisé par le fait que le segment (300) présente une section droite généralement rectangulaire.

9. Roulement selon l'une des revendications 1 à 8, caractérisé par le fait que le segment (300) est un segment métallique fendu radialement.

10. Roulement selon la revendication 9, caractérisé par le fait que le segment (300) est réalisé en acier.

11. Roulement selon l'une des revendications 1 à 8, caractérisé par le fait que le segment (300) est réalisé en matériau à mémoire de forme.

12. Roulement selon l'une des revendications 1 à 11, caractérisé par le fait que le support (200) est réalisé en matière thermoplastique.

13. Roulement selon l'une des revendications 1 à 12, caractérisé par le fait que le support (200) est réalisé par combinaison de plusieurs éléments (202, 204 ; 205, 206, 207) présentant les caractéristiques mécaniques différentes.

14. Roulement selon l'une des revendications 1 à 13, caractérisé par le fait que la cage fixe de roulement est la cage extérieure (100) et que celle-ci est munie de la gorge (110).

15. Roulement selon l'une des revendications 1 à 13, caractérisé par le fait que la cage fixe du roulement est la cage interne (120), et que celle-ci comprend la gorge (110).

## Claims

1. Rolling-contact bearing comprising, in a way known per se, an outer cage (100), an inner cage (120) and rolling bodies (150) which are distributed between the outer cage (100) and the inner cage (120), one of the cages (100) comprising an annular groove (110) and the bearing further comprising an annular support (200) bearing a sensor (250) characterized by the annular support (200) equipped with a peripheral annular slot (220) and by a ring (300) capable of interfering with the annular groove (110) and the annular slot (220) in order to immobilize the sensor support (200) in terms of translation on the cage (100) of the bearing, whilst allowing a relative rotation between this support and this cage.

2. Rolling-contact bearing according to Claim 1, characterized in that the support (200) is designed to be housed between the outer cage (100) and the inner cage (120).

3. Rolling-contact bearing according to one of Claims 1 and 2, characterized in that the slot (220) is provided on a peripheral surface of the support (200).

4. Rolling-contact bearing according to one of Claims 1 to 3, characterized in that the groove (110) exhibits a divergent cross section.

5. Rolling-contact bearing according to one of Claims 1 to 4, characterized in that the groove (110) comprises an axially outer lateral wall (114) which is greatly inclined with respect to the axis of rotation (O-O).

6. Rolling-contact bearing according to one of Claims 1 to 5, characterized in that the groove (110) comprises an axially inner lateral wall (112) which is substantially orthogonal to the axis of rotation (O-O).

7. Rolling-contact bearing according to one of Claims 1 to 6, characterized in that the ring (300) exhibits a substantially circular cross section.

8. Rolling-contact bearing according to one of Claims 1 to 6, characterized in that the ring (300) exhibits a generally rectangular cross section.

9. Rolling-contact bearing according to one of Claims 1 to 8, characterized in that the ring (300) is a radially split metal ring.

10. Rolling-contact bearing according to Claim 9, characterized in that the ring (300) is made of steel.

11. Rolling-contact bearing according to one of Claims 1 to 8, characterized in that the ring (300) is made of a material with shape memory.

12. Rolling-contact bearing according to one of Claims 1 to 11, characterized in that the support (200) is made of a thermoplastic substance.

13. Rolling-contact bearing according to one of Claims 1 to 12, characterized in that the support (200) is made by combining several elements (202, 204; 205, 206, 207) exhibiting different mechanical characteristics.

14. Rolling-contact bearing according to one of Claims 1 to 13, characterized in that the stationary bearing cage is the outer cage (100) and that the latter is equipped with the groove (110).

15. Rolling-contact bearing according to one of Claims 1 to 13, characterized in that the stationary cage of the bearing is the inner cage (120) and that the latter comprises the groove (110).

## Patentansprüche

1. Wälzlager, welches in an sich bekannter Weise einen Außenring (100), einen Innenring (120) sowie zwischen dem Außenring (100) und dem Innenring (120) verteilte Wälzkörper (150) aufweist, wobei einer der Ringe (100) mit einer ringförmigen Nut (110) versehen ist und das Wälzlager weiterhin einen ringförmigen Träger (200) aufweist, der einen Aufnehmer (250) trägt, dadurch gekennzeichnet, daß der ringförmige Träger (200) mit einem ringförmigen, auf dem Umfang liegenden Einschnitt (220) versehen ist, und durch ein Segment (300), das dazu geeignet ist, mit der ringförmigen Nut (110) und dem ringförmigen Einschnitt (220) zusammenzuwirken, um den Träger (200) des Aufnehmers an einer Translationsbewegung auf dem Ring (100) des Wälzlagers zu hindern, hingegen eine relative Drehung zwischen diesen beiden Teilen zuzulassen.

2. Wälzlager nach Anspruch 1, dadurch gekennzeichnet, daß der Träger (200) so ausgelegt ist, daß er zwischen dem Außenring (100) und dem Innenring (120) aufgenommen werden kann.

3. Wälzlager nach Anspruch 1 oder 2, dadurch gekennzeichnet, daß sich der Einschnitt (220) auf einer Umfangsfläche des Trägers (200) befindet.

4. Wälzlager nach einem der Ansprüche 1 bis 3, dadurch gekennzeichnet, daß die Nut (110) einen divergenten Querschnitt aufweist.

5. Wälzlager nach einem der Ansprüche 1 bis 4, dadurch gekennzeichnet, daß die Nut (110) eine in Achsrichtung außenliegende Seitenwand (114) aufweist, die in Bezug zur Drehachse (O-O) stark geneigt ist.

6. Wälzlager nach einem der Ansprüche 1 bis 5, dadurch gekennzeichnet, daß die Nut (110) eine in Achsrichtung innenliegende Seitenwand (112) aufweist, die zur Drehachse (O-O) im wesentlichen senkrecht ist.

7. Wälzlager nach einem der Ansprüche 1 bis 6, dadurch gekennzeichnet, daß das Segment (300) einen im wesentlichen kreisförmigen Querschnitt aufweist.

8. Wälzlager nach einem der Ansprüche 1 bis 6, dadurch gekennzeichnet, daß das Segment (300) einen im allgemeinen rechtwinkligen Querschnitt aufweist.

9. Wälzlager nach einem der Ansprüche 1 bis 8, dadurch gekennzeichnet, daß das Segment (300) ein in Radialrichtung geschlitztes, metallisches Segment ist.

10. Wälzlager nach Anspruch 9, dadurch gekennzeichnet, daß das Segment (300) aus Stahl besteht.

11. Wälzlager nach einem der Ansprüche 1 bis 8, dadurch gekennzeichnet, daß das Segment (300) aus einem Material mit Formgedächtnis besteht.

12. Wälzlager nach einem der Ansprüche 1 bis 11, dadurch gekennzeichnet, daß der Träger (200) aus thermoplastischem Material besteht.

13. Wälzlager nach einem der Ansprüche 1 bis 12, dadurch gekennzeichnet, daß der Träger (200) aus einer Kombination mehrerer Elemente (202, 204; 205, 206, 207) mit unterschiedlichen mechanischen Eigenschaften besteht.

14. Wälzlager nach einem der Ansprüche 1 bis 13, dadurch gekennzeichnet, daß der feststehende Ring des Wälzlagers der Außenring (100) ist und daß dieser mit der Nut (110) versehen ist.

15. Wälzlager nach einem der Ansprüche 1 bis 13, dadurch gekennzeichnet, daß der feststehende Ring des Wälzlagers der Innenring (120) ist und daß dieser die Nut (110) aufweist.
